# EUROPEAN PATENT APPLICATION

(11) **EP 4 796 001 A1**
(43) Date of publication of application: **26.08.2026**
(21) Application number: 24879056.0
(22) Date of filing: 16.10.2024
(51) Int. Cl.: A47L 11/00, G05D 1/43, A47L 11/40, G05D 105/10

(54) **CONTROL METHOD FOR CLEANING DEVICE, AND RELATED DEVICE**

(30) Priority: 16.10.2023 CN 202311337588
(71) Applicant: Beijing Roborock Innovation Technology Co., Ltd., Beijing 102206 (CN)
(72) Inventor: LUO, Longyue, Beijing 102206 (CN); WU, Qi, Beijing 102206 (CN); NIU, Yansheng, Beijing 102206 (CN); WANG, Lei, Beijing 102206 (CN)
(74) Representative: Potter Clarkson
(86) International application number: PCT/CN2024/125385
(87) International publication number: WO 2025/082415

(57) **Abstract**

Embodiments of the present application disclose a control method for a cleaning device, and a related device. The control method comprises: in an obstacle crossing mode, first controlling a cleaning device to move in the direction away from an obstacle, i.e., first controlling the cleaning device to move backwards relative to the obstacle, and then controlling the cleaning device to travel in a first travel direction, wherein the first travel direction is set obliquely relative to the length direction of the obstacle. The control method provided in the embodiments of the present application is helpful for the cleaning device to cross the obstacle by itself when the cleaning device is blocked by the obstacle, especially for crossing relatively low obstacles such as a doorsill and a slideway, thereby reducing manual intervention of a user, improving the cleaning efficiency and the use comfort of the user, and enhancing the user experience.

## Description

The present disclosure claims priority to Chinese Patent Application No. 202311337588.5, filed with the China National Intellectual Property Administration on October 16, 2023 and entitled "CONTROL METHOD FOR CLEANING DEVICE AND RELATED DEVICE", the content of which is incorporated herein by reference in its entirety.

### TECHNICAL FIELD

Embodiments of the present disclosure relate to the technical field of cleaning devices, and in particular, to a control method for a cleaning device and a related device.

### BACKGROUND ART

In the related art, when the cleaning device is used to clean the ground, an obstacle in the operating space may hinder the travel of the cleaning device, which may cause discomfort to the user. For example, the cleaning device may slip in place and cannot travel, resulting in the inability to effectively clean, and even requiring the user to carry the cleaning device, which degrades the user experience.

### SUMMARY

The present disclosure aims to solve at least one of the technical problems existing in the prior art or the related art.

Therefore, a first aspect of the present disclosure provides a control method for a cleaning device.

A second aspect of the present disclosure provides a computer-readable storage medium.

A third aspect of the present disclosure provides a control apparatus.

A fourth aspect of the present disclosure provides a cleaning device.

In view of this, a control method for a cleaning device is provided according to a first aspect of the embodiments of the present disclosure. The control method includes:
controlling, in an obstacle crossing mode, a cleaning device to move in a direction away from an obstacle; and
controlling the cleaning device to travel in a first traveling direction to cross the obstacle;
where the first traveling direction is inclinedly set relative to a length direction of the obstacle.

In one feasible embodiment, the step of controlling the cleaning device to travel in the first traveling direction to cross the obstacle includes:
controlling, when a current obstacle crossing space of the cleaning device is greater than or equal to a preset value, the cleaning device to travel in the first traveling direction to cross the obstacle; and
controlling, when the current obstacle crossing space of the cleaning device is less than the preset value, the cleaning device to move along the length direction of the obstacle, and controlling, until the obstacle crossing space is greater than or equal to the preset value, the cleaning device to travel in the first traveling direction to cross the obstacle.

In one feasible embodiment, the step of controlling the cleaning device to travel in the first traveling direction to cross the obstacle includes:
controlling the cleaning device to travel in the first traveling direction and pass over the obstacle at a speed greater than a preset value.

In one feasible embodiment, the step of controlling, in the obstacle crossing mode, the cleaning device to move in the direction away from where the obstacle is located includes:
controlling, in the obstacle crossing mode, the cleaning device to travel in a straight line in the direction away from where the obstacle is located; and
controlling, when the cleaning device travels in the straight line, the cleaning device to travel in a twisting manner in the direction away from where the obstacle is located if a slipping condition exists.

In one feasible embodiment, a direction toward the obstacle is a first direction, and a direction away from where the obstacle is located is a second direction. The step of controlling the cleaning device to travel in a twisting manner in the direction away from where the obstacle is located includes:
controlling a linear velocity direction of the cleaning device to remain in the first direction, and controlling an angular velocity direction of the cleaning device to alternately switch between a third direction and a fourth direction; or
controlling a movement mode of the cleaning device to alternately switch between rotational travel and linear travel, such that a motion trajectory of the cleaning device is in a zigzag shape;
where the third direction is different from the fourth direction.

In one feasible embodiment, the obstacle crossing instruction is issued by a user; and/or
the obstacle crossing instruction is generated based on an operating state of the cleaning device.

In one feasible embodiment, the obstacle crossing instruction is generated when the cleaning device is blocked by the obstacle and is unable to move in the direction toward the obstacle, and/or when the cleaning device slips.

In one feasible embodiment, the step of controlling the cleaning device to move in the direction away from where the obstacle is located includes:
controlling the cleaning device to move in the direction away from where the obstacle is located by a distance of 15 cm to 20 cm.

In one feasible embodiment, an inclination angle of the first traveling direction relative to the length direction of the obstacle is less than or equal to 30°.

A computer-readable storage medium is provided according to a second aspect of the embodiments of the present disclosure.

The computer-readable storage medium stores a computer program to implement the control method according to any one of the above technical solutions.

A control apparatus is provided according to a third aspect of the embodiments of the present disclosure. The control apparatus includes:
a memory storing a computer program; and
a processor running the computer program;
where the processor, when running the computer program, implements the control method according to any one of the above technical solutions.

A cleaning device is provided according to a fourth aspect of the embodiments of the present disclosure. The cleaning device includes:
a cleaning device body;
the control apparatus according to the above technical solutions; and
a sensor assembly, where the sensor assembly is disposed on the cleaning device body, and the control apparatus is connected to the sensor assembly and obtains an obstacle crossing space of the cleaning device body based on the sensor assembly.

Compared with the prior art, the present disclosure includes at least the following beneficial effects.

According to the control method in the embodiments of the present disclosure, after the cleaning device receives an obstacle crossing instruction or generates the obstacle crossing instruction by itself, in the obstacle crossing mode, the cleaning device may be controlled to move in the direction away from where the obstacle is located. That is, the cleaning device is controlled to reverse relative to the direction of the obstacle first, and then the cleaning device is controlled to travel in the first traveling direction, where the first traveling direction is inclinedly set relative to the length direction of the obstacle. Based on this, according to the control method in the embodiments of the present disclosure, in one aspect, the cleaning device is controlled to reverse first, such that the cleaning device can change the traveling direction and autonomously escape from the trapped area, and meanwhile, in the subsequent obstacle crossing process, the area for reversing may be used as the space for the cleaning device to accelerate, such that the speed of the cleaning device when crossing the obstacle can be increased, and the success rate of obstacle crossing can be improved. In another aspect, the cleaning device is controlled to travel in the first traveling direction, that is, the cleaning device is controlled to travel obliquely relative to the obstacle, such that the cleaning device can have a larger space for obstacle crossing, and the obstacle crossing efficiency can be improved. In summary, the control method in the embodiments of the present disclosure helps the cleaning device cross an obstacle by itself when the cleaning device is blocked by the obstacle, especially helping cross relatively low obstacles such as a door threshold and a sliding rail. This can reduce the manual intervention by the user, improve the cleaning efficiency and user comfort, and improve the user experience.

### BRIEF DESCRIPTION OF THE DRAWINGS

By reading the detailed description of preferred embodiments below, various additional advantages and benefits will become clear to those of ordinary skill in the art. The drawings are provided solely for the purpose of illustrating the preferred embodiments and are not to be construed as limiting the scope of the present disclosure. In addition, the same components are denoted by the same reference numerals throughout the drawings. In the drawings:
FIG. 1 is a schematic flowchart of a control method for a cleaning device according to one embodiment of the present disclosure;
FIG. 2 is a schematic diagram showing a state of a travel path of a cleaning device during the execution of a control method for a cleaning device according to one embodiment of the present disclosure;
FIG. 3 is a schematic diagram showing another state of a travel path of a cleaning device during the execution of a control method for a cleaning device according to one embodiment of the present disclosure;
FIG. 4 is a schematic diagram showing a first obstacle crossing state during the execution of a control method for a cleaning device according to one embodiment of the present disclosure;
FIG. 5 is a schematic diagram showing a second obstacle crossing state during the execution of a control method for a cleaning device according to one embodiment of the present disclosure;
FIG. 6 is a schematic diagram showing a third obstacle crossing state during the execution of a control method for a cleaning device according to one embodiment of the present disclosure;
FIG. 7 is a schematic diagram showing a fourth obstacle crossing state during the execution of a control method for a cleaning device according to one embodiment of the present disclosure;
FIG. 8 is a schematic diagram showing a fifth obstacle crossing state during the execution of a control method for a cleaning device according to one embodiment of the present disclosure;
FIG. 9 is a schematic diagram showing a sixth obstacle crossing state during the execution of a control method for a cleaning device according to one embodiment of the present disclosure;
FIG. 10 is a structural block diagram of a computer-readable storage medium according to one embodiment of the present disclosure; and
FIG. 11 is a structural block diagram of a control apparatus according to one embodiment of the present disclosure.

### DETAILED DESCRIPTION

In order to better understand the above technical solutions, the technical solutions in embodiments of the present disclosure will be described in detail below with reference to the drawings and specific embodiments. It should be understood that the embodiments of the present disclosure and specific features in the embodiments are detailed descriptions of the technical solutions in the embodiments of the present disclosure, but are not intended to limit the technical solutions in the present disclosure. The embodiments of the present disclosure and the technical features in the embodiments may be combined with each other without conflict.

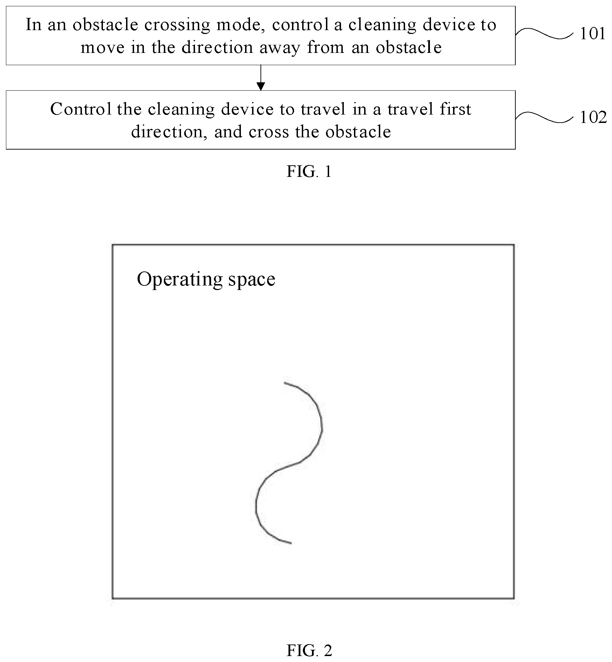

As shown in FIG. 1, a control method for a cleaning device is provided according to a first aspect of the embodiments of the present disclosure. The control method includes the following steps.

In step 101, in an obstacle crossing mode, the cleaning device is controlled to move in a direction away from an obstacle. It can be understood that an obstacle crossing instruction may be issued by a user or may be generated by the cleaning device itself. For example, if the user finds that the cleaning device slips in front of a door threshold or a sliding rail, the user may directly send the obstacle crossing instruction to control the cleaning device to cross the obstacle. For another example, the cleaning device detects a rotation state of a wheel body or an operation state of a motor, and when the cleaning device is found to be in a slipping state, it can be considered that the cleaning device is blocked by the obstacle. In this case, the obstacle crossing instruction may be generated by the cleaning device itself. After receiving the obstacle crossing, the cleaning device may be controlled to reverse first, such that the cleaning device moves away from the obstacle, facilitating the subsequent obstacle crossing.

In step 102, the cleaning device is controlled to travel in a first traveling direction to cross the obstacle. After the cleaning device reverses away from the obstacle, the traveling direction of the cleaning device may be changed, such that the traveling direction of the cleaning device is adjusted to the first traveling direction. The cleaning device is further controlled to travel, such that the cleaning device can cross the obstacle in the direction at an angle relative to the length direction of the obstacle, enabling the cleaning device to have a larger obstacle crossing space. Meanwhile, the cleaning device may cross the obstacle in a diagonal dash manner, which can reduce the hindering effect of the obstacle and improve the obstacle crossing efficiency.

The first traveling direction is inclinedly set relative to the length direction of the obstacle.

According to the control method in the embodiments of the present disclosure, after the cleaning device receives an obstacle crossing instruction or generates the obstacle crossing instruction by itself, in the obstacle crossing mode, the cleaning device may be controlled to move in the direction away from where the obstacle is located. That is, the cleaning device is controlled to reverse relative to the direction of the obstacle first, and then the cleaning device is controlled to travel in the first traveling direction, where the first traveling direction is inclinedly set relative to the length direction of the obstacle. Based on this, according to the control method in the embodiments of the present disclosure, in one aspect, the cleaning device is controlled to reverse first, such that the cleaning device can change the traveling direction and autonomously escape from the trapped area, and meanwhile, in the subsequent obstacle crossing process, the area for reversing may be used as the space for the cleaning device to accelerate, such that the speed of the cleaning device when crossing the obstacle can be increased, and the success rate of obstacle crossing can be improved. In another aspect, the cleaning device is controlled to travel in the first traveling direction, that is, the cleaning device is controlled to travel obliquely relative to the obstacle, such that the cleaning device can have a larger space for obstacle crossing, and the obstacle crossing efficiency can be improved. In summary, the control method in the embodiments of the present disclosure helps the cleaning device cross an obstacle by itself when the cleaning device is blocked by the obstacle, especially helping cross relatively low obstacles such as a door threshold and a sliding rail. This can reduce the manual intervention by the user, improve the cleaning efficiency and user comfort, and improve the user experience.

It can be understood that in some examples, the shape of the obstacle may be irregular. In this case, the maximum one of the connection lines between any two points on the edge contour of the obstacle may be used as the length direction of the obstacle.

In one feasible embodiment, the step of controlling the cleaning device to travel in the first traveling direction to cross the obstacle includes: controlling, when a current obstacle crossing space of the cleaning device is greater than or equal to a preset value, the cleaning device to travel in the first traveling direction to cross the obstacle; and controlling, when the current obstacle crossing space of the cleaning device is less than the preset value, the cleaning device to move along the length direction of the obstacle, and controlling, until the obstacle crossing space is greater than or equal to the preset value, the cleaning device to travel in the first traveling direction to cross the obstacle.

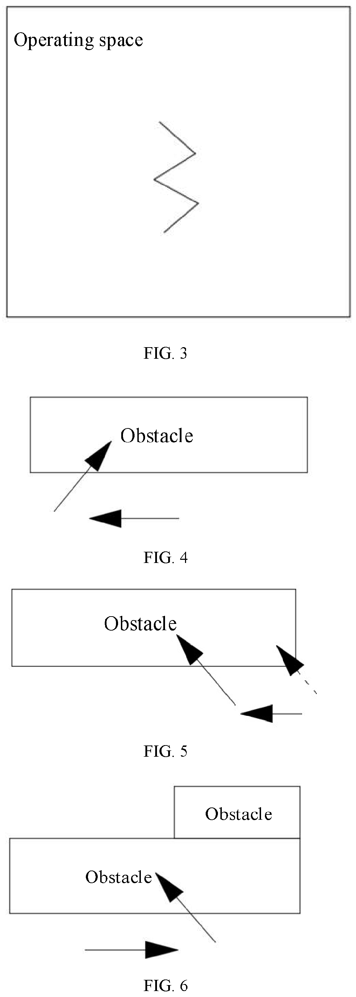

In this technical solution, the step of the cleaning device traveling in the first traveling direction to cross the obstacle is further provided. In the process of controlling the cleaning device to cross the obstacle, an obstacle crossing space may be determined. If the obstacle crossing space meets the requirement of the preset value, the cleaning device may be controlled to directly cross the obstacle in the first traveling direction. However, in some cases, the cleaning device in the current state may not have a sufficient obstacle crossing space, that is, the obstacle crossing space is less than or equal to the preset value. In such cases, as shown in FIG. 4, the cleaning device may be controlled to move along the length direction of the obstacle; that is, the cleaning device is controlled to first translate, and then the cleaning device is controlled to cross the obstacle in the first traveling direction. In this way, the success rate of obstacle crossing can be ensured.

It can be understood that the preset value for comparison with the obstacle crossing space may be an angle at which the cleaning device can travel or the shortest distance to an obstacle in a direction in which the cleaning device can travel.

As shown in FIG. 5, in FIG. 5, the obstacle is a door threshold or a sliding rail. If the cleaning device directly (along a path indicated by a dashed arrow) performs a diagonal dash to cross the obstacle in the first traveling direction, the cleaning device may impact the wall. In this case, the cleaning device needs to be controlled to first move along the length direction of the obstacle to perform translation, and then to perform a diagonal dash to cross the obstacle based on the first traveling direction, such that a larger obstacle crossing space can be obtained, improving the obstacle crossing efficiency.

As shown in FIG. 6, in FIG. 6, the obstacle includes a door threshold and other obstacles placed near the door threshold. If the cleaning device directly performs a diagonal dash to cross the obstacle in the first traveling direction, the cleaning device may impact the other obstacles. In this case, the cleaning device needs to be controlled to first move along the length direction of the obstacle to perform translation, and then to perform a diagonal dash to cross the obstacle based on the first traveling direction, such that a larger obstacle crossing space can be obtained, improving the obstacle crossing efficiency.

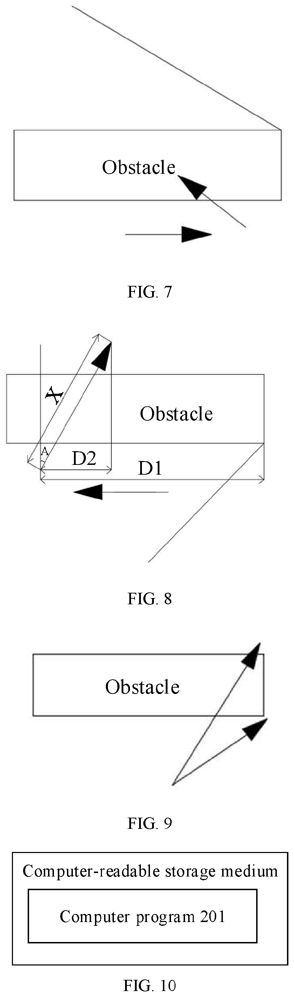

As shown in FIG. 7, in FIG. 7, the obstacle includes a door threshold, but the door is in a half-opened state. If the cleaning device directly performs a diagonal dash to cross the obstacle in the first traveling direction, the cleaning device may impact the door. In this case, the cleaning device needs to be controlled to first move along the length direction of the obstacle to perform translation, and then to perform a diagonal dash to cross the obstacle based on the first traveling direction, such that a larger obstacle crossing space can be obtained, improving the obstacle crossing efficiency.

As shown in FIG. 8, in FIG. 8, the obstacle includes a door threshold, but there is an obstacle by the side of the cleaning device, making it difficult for the cleaning device to directly cross the obstacle. In this case, the cleaning device needs to be controlled to first move along the length direction of the obstacle to perform translation, and then to perform a diagonal dash to cross the obstacle based on the first traveling direction, such that a larger obstacle crossing space can be obtained, improving the obstacle crossing efficiency.

In one feasible embodiment, the step of controlling the cleaning device to travel in the first traveling direction to cross the obstacle includes: controlling the cleaning device to travel in the first traveling direction and pass over the obstacle at a speed greater than the preset value.

In this technical solution, when the cleaning device crosses the obstacle, the cleaning device may be controlled to accelerate and pass over the obstacle at a speed higher than a normal traveling speed. Based on this, the cleaning device can come into contact with the obstacle at a higher speed, which can improve the obstacle crossing efficiency.

It can be understood that the preset value may be set by the user or by the cleaning device. The higher the preset value is, the higher the success rate of obstacle crossing is; the lower the preset value is, the safer the movement of the cleaning device is.

In some examples, the speed of the cleaning device, when traveling in the first direction and coming into contact with the obstacle, may be 0.3 m/s. In this way, the obstacle crossing efficiency can be improved while preventing the cleaning device from traveling too fast.

In one feasible embodiment, the step of controlling, in the obstacle crossing mode, the cleaning device to move in the direction away from where the obstacle is located includes: controlling, in the obstacle crossing mode, the cleaning device to travel in a straight line in the direction away from where the obstacle is located; and controlling, when the cleaning device travels in the straight line, the cleaning device to travel in a twisting manner in the direction away from where the obstacle is located if a slipping condition exists.

In this technical solution, a specific step of controlling the cleaning device to move in the direction away from where the obstacle is located is further provided, and the cleaning device may be controlled to travel in a straight line in the direction away from where the obstacle is located. In this case, the cleaning device moves away from the obstacle at the fastest speed. However, in some operating conditions, the cleaning device is hindered by the obstacle and may not be able to directly reverse away from the obstacle. In this case, the cleaning device may be controlled to reverse in a twisting manner, which can ensure that the cleaning device can move away from the obstacle first.

In one feasible embodiment, a direction toward the obstacle is a first direction, and a direction away from where the obstacle is located is a second direction. The step of controlling the cleaning device to travel in a twisting manner in the direction away from where the obstacle is located includes: controlling a linear velocity direction of the cleaning device to remain in the first direction, and controlling an angular velocity direction of the cleaning device to alternately switch between a third direction and a fourth direction; or controlling a movement mode of the cleaning device to alternately switch between rotational travel and linear travel, such that the motion trajectory of the cleaning device is in a zigzag shape. It can be understood that the third direction is different from the fourth direction.

In this technical solution, the step of controlling the cleaning device to travel in a twisting manner is further provided. The linear velocity direction of the cleaning device may be controlled to remain in the first direction, and the angular velocity direction of the cleaning device may be controlled to alternately switch between the third direction and the fourth direction. That is, the moving direction of the cleaning device is always away from the obstacle that needs to be crossed, but the cleaning device is controlled to sway in the reversing process. In this case, the cleaning device may be controlled to travel in a twisting manner away from the obstacle that needs to be crossed.

In this technical solution, the step of controlling the cleaning device to travel in a twisting manner is further provided, and the movement mode of the cleaning device may also be controlled to alternately switch between rotational travel and linear travel; that is, the cleaning device switches between linear travel and rotational travel. In this case, the cleaning device may reverse away from the obstacle along a zigzag traveling route.

In some examples, the operating speed of the cleaning device is based on the control center, and the movement of the cleaning device may be described by a linear velocity v and an angular velocity w. An integral trajectory of the speed is a circular arc trajectory of the movement of the machine, with a trajectory radius r = v/w, where:
v > 0 indicates the forward traveling of the cleaning device, v = 0 indicates that the linear velocity of the cleaning device is 0, and v < 0 indicates the backward traveling of the cleaning device; and
w > 0 indicates the counterclockwise rotation direction, w = 0 indicates that the cleaning device does not rotate, and w < 0 indicates that the cleaning device rotates clockwise.

As shown in FIG. 2, in some examples, the step of controlling the linear velocity direction of the cleaning device to remain in the first direction and controlling the angular velocity direction of the cleaning device to alternately switch between the third direction and the fourth direction may include: running for a first period of time with v < 0 and w > 0, and then running for a second period of time with v < 0 and w < 0, such that the cleaning device alternately travels back and forth. The travel path, as shown in FIG. 2, is substantially in an S shape.

As shown in FIG. 3, in some examples, the movement mode of the cleaning device is controlled to alternately switch between rotational travel and linear travel. The cleaning device first rotates by a certain angle with w > 0 and v = 0, then reverses in a straight line with v < 0 and w = 0, followed by rotating by a certain angle with w < 0 and v = 0, and then reversing in a straight line with v < 0 and w = 0. The sequence of rotation directions may be swapped. The travel path, as shown in FIG. 3, is substantially in a zigzag shape.

In one feasible embodiment, the obstacle crossing instruction is issued by the user; and/or the obstacle crossing instruction is generated based on the operating state of the cleaning device.

In this technical solution, the obstacle crossing instruction may be issued by the user or may be generated by the cleaning device itself. For example, if the user finds that the cleaning device slips in front of a door threshold or a sliding rail, the user may directly send the obstacle crossing instruction to control the cleaning device to cross the obstacle. For another example, the cleaning device detects the rotation state of a wheel body or the operation state of a motor, and when the cleaning device is found to be in the slipping state, it can be considered that the cleaning device is blocked by the obstacle. In this case, the obstacle crossing instruction may be generated by the cleaning device itself. After receiving the obstacle crossing, the cleaning device may be controlled to reverse first, such that the cleaning device moves away from the obstacle, facilitating the subsequent obstacle crossing. In this way, the user can directly control the cleaning device to cross the obstacle, and the cleaning device can also cross the obstacle by itself when determining that it is trapped, further improving the user experience.

In one feasible embodiment, the obstacle crossing instruction is generated when the cleaning device is blocked by the obstacle and is unable to move in the direction toward the obstacle, and/or when the cleaning device slips.

In this technical solution, the arrangement of the cleaning device generating the obstacle crossing instruction by itself is further provided. When the cleaning device is blocked by an obstacle or slips, it can be determined that the cleaning device is trapped. In this case, the obstacle crossing instruction may be automatically generated, further improving the user experience.

In one feasible embodiment, the step of controlling the cleaning device to move in the direction away from where the obstacle is located includes: controlling the cleaning device to move in the direction away from where the obstacle is located by a distance of 15 cm to 20 cm.

In this technical solution, the distance by which the cleaning device reverses before obstacle crossing is further provided, and the reversing distance of the cleaning device is 15 cm to 20 cm. In this way, the cleaning device is ensured to have a sufficient space for performing a diagonal dash, ensuring that the cleaning device exhibits a sufficient speed when coming into contact with the obstacle, while avoiding the long-distance idle traveling of the cleaning device caused by an excessively long reversing distance of the cleaning device, thereby improving the obstacle crossing efficiency and the user experience.

In one feasible embodiment, the inclination angle of the first traveling direction relative to the length direction of the obstacle is less than or equal to 30°.

In this technical solution, the inclination angle of the first traveling direction relative to the length direction of the obstacle is further provided. By setting the inclination angle to be less than or equal to 30°, it is ensured that the cleaning device can have a sufficiently large obstacle crossing space when crossing the obstacle. Meanwhile, it facilitates the fulfillment of the obstacle crossing condition, such that the cleaning device can be prevented from moving back and forth in the conditional traveling direction, improving the obstacle crossing efficiency. It can be understood that, as shown in FIG. 9, if the inclination angle is greater than 30°, the cleaning device needs to translate frequently. Meanwhile, considering the usage scenario of the cleaning device, the cleaning device usually needs to cross a door threshold, and due to the influence of the door width, the inclination angle may not be able to reach more than 30°, which may lead to the failure of obstacle crossing.

As shown in FIG. 8, an angle A is the inclination angle of the first traveling direction relative to the length direction of the obstacle, X is the distance required for crossing the obstacle and is generally greater than or equal to 50 cm, D1 is the maximum distance between the tilting device and the edge of the obstacle, and the arrow direction is the direction in which the machine dashes diagonally. D1 is the space on the wider side between the tilting device and the obstacle, and the space required for the machine to move forward by X is D2. When the angle A is equal to 30°, the obstacle can be crossed. However, in some operating conditions, D1 will be less than D2, and the tilting device will move aside to the outermost edge. If the cleaning device is still not able to dash at an inclination angle of 30° at this time, the angle A may be back-calculated based on D1 and X. In this case, the angle A will be less than 30°.

As shown in FIG. 10, a computer-readable storage medium is provided according to a second aspect of the embodiments of the present disclosure. The computer-readable storage medium stores a computer program 201 to implement the control method according to any one of the above technical solutions.

The computer-readable storage medium according to the embodiments of the present disclosure implements the control method according to any one of the above technical solutions. Therefore, the computer-readable storage medium has all the beneficial effects of the control method according to the above technical solutions.

According to the computer-readable storage medium in the embodiments of the present disclosure, after the cleaning device receives an obstacle crossing instruction or generates the obstacle crossing instruction by itself, in the obstacle crossing mode, the cleaning device may be controlled to move in the direction away from where the obstacle is located. That is, the cleaning device is controlled to reverse relative to the direction of the obstacle first, and then the cleaning device is controlled to travel in the first traveling direction, where the first traveling direction is inclinedly set relative to the length direction of the obstacle. Based on this, according to the control method in the embodiments of the present disclosure, in one aspect, the cleaning device is controlled to reverse first, such that the cleaning device can change the traveling direction and autonomously escape from the trapped area, and meanwhile, in the subsequent obstacle crossing process, the area for reversing may be used as the space for the cleaning device to accelerate, such that the speed of the cleaning device when crossing the obstacle can be increased, and the success rate of obstacle crossing can be improved. In another aspect, the cleaning device is controlled to travel in the first traveling direction; that is, the cleaning device is controlled to travel obliquely relative to the obstacle, such that the cleaning device can have a larger space for obstacle crossing, and the obstacle crossing efficiency can be improved. In summary, the control method in the embodiments of the present disclosure helps the cleaning device cross an obstacle by itself when the cleaning device is blocked by the obstacle, especially helping cross relatively low obstacles such as a door threshold and a sliding rail. This can reduce the manual intervention by the user, improve the cleaning efficiency and user comfort, and improve the user experience.

Based on such an understanding, the technical solutions according to the present disclosure may be embodied in the form of a software product. The software product may be stored in a non-volatile storage medium (which may be a CD-ROM, a USB flash drive, a portable hard drive, or the like), and includes several instructions to enable a computer device (which may be a personal computer, a server, a network device, or the like) to perform the method according to the implementation scenarios of the present disclosure.

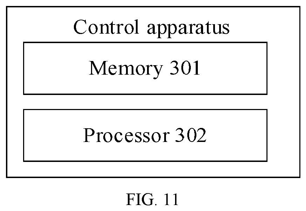

As shown in FIG. 11, a control apparatus is provided according to a third aspect of the embodiments of the present disclosure. The control apparatus includes: a memory 301, storing a computer program; and a processor 302, executing the computer program; where the processor 302, when executing the computer program, implements the control method according to any one of the above technical solutions.

The control apparatus according to the embodiments of the present disclosure implements the control method according to any one of the above computational solutions. Therefore, the control apparatus has all the beneficial effects of the control method according to the above technical solutions.

According to the control apparatus in the embodiments of the present disclosure, after the cleaning device receives an obstacle crossing instruction or generates the obstacle crossing instruction by itself, in the obstacle crossing mode, the cleaning device may be controlled to move in the direction away from where the obstacle is located. That is, the cleaning device is controlled to reverse relative to the direction of the obstacle first, and then the cleaning device is controlled to travel in the first traveling direction, where the first traveling direction is inclinedly set relative to the length direction of the obstacle. Based on this, according to the control method in the embodiments of the present disclosure, in one aspect, the cleaning device is controlled to reverse first, such that the cleaning device can change the traveling direction and autonomously escape from the trapped area, and meanwhile, in the subsequent obstacle crossing process, the area for reversing may be used as the space for the cleaning device to accelerate, such that the speed of the cleaning device when crossing the obstacle can be increased, and the success rate of obstacle crossing can be improved. In another aspect, the cleaning device is controlled to travel in the first traveling direction, that is, the cleaning device is controlled to travel obliquely relative to the obstacle, such that the cleaning device can have a larger space for obstacle crossing, and the obstacle crossing efficiency can be improved. In summary, the control method in the embodiments of the present disclosure helps the cleaning device cross an obstacle by itself when the cleaning device is blocked by the obstacle, especially helping cross relatively low obstacles such as a door threshold and a sliding rail. This can reduce the manual intervention by the user, improve the cleaning efficiency and user comfort, and improve the user experience.

In some examples, the control apparatus may further include a user interface, a network interface, a camera, a radio frequency (radio frequency, RF) circuit, a sensor, an audio circuit, a WI-FI assembly, and the like. The user interface may include a display (display), an input unit such as a keyboard (keyboard), and the like. An optional user interface may also include a USB interface, a card reader interface, and the like. The network interface may optionally include a standard wired interface, a standard wireless interface (for example, a WI-FI interface), and the like.

In an exemplary embodiment, the control apparatus may further include an input/output interface and a display device. The functional units may communicate with each other via a bus. The memory 301 stores a computer program, and the processor 302 is configured to run the program stored in the memory 301 to implement the method according to the above embodiments.

The above storage medium may further include an operating system and a network communication module. The operating system is the program that manages hardware and software resources of the entity device in the above method, and supports the operation of an information processing program and other software and/or programs. The network communication module is configured to implement the communication between the assemblies inside the storage medium, and the communication with other hardware and software in the information processing entity device.

A cleaning device is provided according to a fourth aspect of the embodiments of the present disclosure. The cleaning device includes: a cleaning device body; the control apparatus according to the above technical solutions; and a sensor assembly, where the sensor assembly is disposed on the cleaning device body, and the control apparatus is connected to the sensor assembly and obtains an obstacle crossing space of the cleaning device body based on the sensor assembly.

The cleaning device according to the embodiments of the present disclosure includes the control apparatus according to any one of the above technical solutions. Therefore, the cleaning device has all the beneficial effects of the cleaning apparatus according to the above calculation solutions, which are not repeated herein.

According to the cleaning device in the embodiments of the present disclosure, by the arrangement of the sensor assembly, the travel state of the cleaning device can be determined. When the cleaning device slips, the obstacle crossing instruction may be directly generated. After receiving the obstacle crossing instruction, the control apparatus may respond to the obstacle crossing instruction and control the cleaning device body to move to cross the obstacle, which can ensure the success rate of obstacle crossing.

Based on the descriptions of the above embodiments, those skilled in the art can clearly understand that the present disclosure may be implemented by the mode of software in combination with a necessary general hardware platform, or may be implemented by hardware.

The present disclosure is described with reference to flowcharts and/or block diagrams of the method, the device (system), and the computer program product according to the embodiments of the present disclosure. It should be understood that each procedure and/or block in the flowcharts and/or the block diagrams and a combination of the procedures and/or the blocks in the flowcharts and/or the block diagrams may be implemented by computer program instructions. These computer program instructions may be provided to a processor of a general-purpose computer, a special-purpose computer, an embedded computer, or other programmable data processing devices to generate a machine, such that an apparatus for achieving functions designated in one or more procedures of the flowcharts and/or one or more blocks of the block diagrams is generated based on instructions executed by the processors of the computers or other programmable data processing devices.

In the present disclosure, the terms "first", "second", and "third" are merely used for descriptive purposes, and shall not be understood as indicating or implying relative importance. The term "plurality of" means two or more, unless explicitly defined otherwise. The terms "mount", "interconnect", "connect", "fix", and the like should be interpreted in their broad senses. For example, "connect" may be a fixed connection, a detachable connection, or an integral connection, and "interconnect" may be a direct connection, or an indirect connection via an intermediate. For those of ordinary skill in the art, the specific meanings of the aforementioned terms in the present disclosure can be understood according to specific conditions.

In the description of the present disclosure, it should be understood that orientations or positional relationships indicated by terms such as "upper", "lower", "left", "right", "front", and "rear" are those shown based on the drawings, and are merely intended to facilitate and simplify description of the present disclosure rather than to indicate or imply that the indicated apparatus or unit must have a specific direction and be structured and operated according to the specific orientation, and should not be construed as limiting the present disclosure.

In the description of the specification, the description of terms "one embodiment", "some embodiments", "a specific embodiment", and the like means that specific features, structures, materials, or characteristics described in connection with the embodiments or examples are included in at least one embodiment or example of the present disclosure. In the specification, the schematic description of the aforementioned terms does not necessarily refer to the same embodiment or example. Moreover, the specific features, structures, materials, or characteristics described may be combined in a suitable manner in any one or more embodiments or examples.

The above are only preferred embodiments of the present disclosure and are not intended to limit the present disclosure. For those skilled in the art, the present disclosure can be modified and varied. Any modification, equivalent substitution, improvement, and the like made within the spirit and principle of the present disclosure shall all fall within the protection scope of the present disclosure.

## Claims

1. A control method for a cleaning device, wherein the control method comprises:
controlling, in an obstacle crossing mode, a cleaning device to move in a direction away from where an obstacle is located; and
controlling the cleaning device to travel in a first traveling direction to cross the obstacle;
wherein the first traveling direction is inclinedly set relative to a length direction of the obstacle.

2. The control method for a cleaning device according to claim 1, wherein the step of controlling the cleaning device to travel in the first traveling direction to cross the obstacle comprises:
controlling, when a current obstacle crossing space of the cleaning device is greater than or equal to a preset value, the cleaning device to travel in the first traveling direction to cross the obstacle; and
controlling, when the current obstacle crossing space of the cleaning device is less than the preset value, the cleaning device to move along the length direction of the obstacle, and controlling, until the obstacle crossing space is greater than or equal to the preset value, the cleaning device to travel in the first traveling direction to cross the obstacle.

3. The control method for a cleaning device according to claim 1, wherein the step of controlling the cleaning device to travel in the first traveling direction to cross the obstacle comprises:
controlling the cleaning device to travel in the first traveling direction and pass over the obstacle at a speed greater than a preset value.

4. The control method for a cleaning device according to claim 1, wherein the step of controlling, in the obstacle crossing mode, the cleaning device to move in the direction away from where the obstacle is located comprises:
controlling, in the obstacle crossing mode, the cleaning device to travel in a straight line in the direction away from where the obstacle is located; and
controlling, when the cleaning device travels in the straight line, the cleaning device to travel in a twisting manner in the direction away from where the obstacle is located if a slipping condition exists.

5. The control method for a cleaning device according to claim 4, wherein a direction toward the obstacle is a first direction, and the step of controlling the cleaning device to travel in a twisting manner in the direction away from where the obstacle is located comprises:
controlling a linear velocity direction of the cleaning device to remain in the first direction, and controlling an angular velocity direction of the cleaning device to alternately switch between a third direction and a fourth direction; or
controlling a movement mode of the cleaning device to alternately switch between rotational travel and linear travel, such that a motion trajectory of the cleaning device is in a zigzag shape;
wherein the third direction is different from the fourth direction.

6. The control method for a cleaning device according to any one of claims 1 to 5, wherein
the obstacle crossing instruction is issued by a user; and/or
the obstacle crossing instruction is generated based on an operating state of the cleaning device.

7. The control method for a cleaning device according to claim 6, wherein
the obstacle crossing instruction is generated when the cleaning device is blocked by the obstacle and is unable to move in the direction toward the obstacle, and/or when the cleaning device slips.

8. The control method for a cleaning device according to any one of claims 1 to 5, wherein the step of controlling the cleaning device to move in the direction away from where the obstacle is located comprises:
controlling the cleaning device to move in the direction away from where the obstacle is located by a distance of 15 cm to 20 cm.

9. The control method for a cleaning device according to any one of claims 1 to 5, wherein
an inclination angle of the first traveling direction relative to the length direction of the obstacle is less than or equal to 30°.

10. A computer-readable storage medium, wherein
the computer-readable storage medium stores a computer program to implement the control method according to any one of claims 1 to 9.

11. A control apparatus, wherein the control apparatus comprises:
a memory storing a computer program; and
a processor running the computer program;
wherein the processor, when running the computer program, implements the control method according to any one of claims 1 to 9.

12. A cleaning device, wherein the cleaning device comprises:
a cleaning device body;
the control apparatus according to claim 11; and
a sensor assembly, wherein the sensor assembly is disposed on the cleaning device body, and the control apparatus is connected to the sensor assembly and obtains an obstacle crossing space of the cleaning device body based on the sensor assembly.
